# EUROPÄISCHE PATENTSCHRIFT

(11) **EP 3 985 385 B1**
(45) Veröffentlichungstag und Bekanntmachung des Hinweises auf die Patenterteilung: **29.05.2024**
(21) Anmeldenummer: 21200353.7
(22) Anmeldetag: 30.09.2021
(51) Int. Cl.: B61B 12/10

(54) **VERFAHREN UND VORRICHTUNG ZUR ÜBERWACHUNG DER INTEGRITÄT EINER DRAHTSEILANORDNUNG**
METHOD AND DEVICE FOR MONITORING THE INTEGRITY OF A WIRE CABLE ASSEMBLY
PROCÉDÉ ET DISPOSITIF DE SURVEILLANCE DE L'INTÉGRITÉ D'UN AGENCEMENT DE CÂBLE MÉTALLIQUE

(30) Priorität: 15.10.2020 DE 102020127250
(43) Veröffentlichungstag der Anmeldung: 20.04.2022
(73) Patentinhaber: Wickert, Jo, 88709 Meersburg (DE); Verreet, Pierre, 6300 Zug (CH)
(72) Erfinder: Wickert, Jo, 88709 Meersburg (DE); Verreet, Pierre, 6300 Zug (CH)
(74) Vertreter: Zeiner, Johannes Michael

(56) Entgegenhaltungen:
- EP-A1- 0 757 829
- CN-A- 105 929 018
- US-A1- 2007 090 834
- US-A1- 2016 297 455
- US-A1- 2019 202 666
- US-A1- 2019 218 062

## Beschreibung

Die vorliegende Erfindung betrifft ein Verfahren und eine Vorrichtung zur Überwachung der Integrität eines Drahtseils in einer Drahtseilanordnung sowie eine Drahtseilanordnung mit einer solchen Vorrichtung.

Drahtseile werden oft zum Tragen oder Festzurren großer Lasten verwendet und bestehen aus einer Vielzahl an Drähten, die üblicherweise zu Litzen bzw. Kardeelen verdreht sind. Diese sind in der Regel wiederum um eine Einlage, die sogenannte Seele, geschlagen. In einigen Fällen, etwa bei der Verwendung in Hängebrücken, können die Drähte aber auch unverdreht parallel zueinander angeordnet sein. In diesem Fall werden die Drähte üblicherweise mit Seilklemmen zusammengepresst.

Durch Beanspruchung kann im Laufe der Zeit die Integrität eines Drahtseils beeinträchtigt werden. Beispielsweise können einzelne der Drähte brechen oder zumindest einreißen. Dies tritt zum Beispiel bei häufiger Biegung des Drahtseils auf, etwa an Seilscheiben bzw. Seilrollen zur Umlenkung des Drahtseils. Gegebenenfalls kann auch Korrosion oder ein anderer chemischer Prozess zum Versagen einzelner Drähte beitragen. Problematisch ist dabei, dass im Inneren des Drahtseils verlaufende Drahtabschnitte nicht visuell auf ihre Integrität geprüft werden können. Daher wurden nichtinvasive Verfahren entwickelt, die auf magnetischen Wechselwirkungen basieren und mit denen Drahtseile in regelmäßigen Abständen gewartet werden.

Aus US2016/0297455 A1 ist ein Verfahren zur Überprüfung eines sich bewegenden, geraden Drahtseils 8 bekannt, bei dem durch eine Detektiereinrichtung 1 mittels magnetischer Wechselwirkung eine Schädigung des Drahtseils 8 erfasst wird.

Ein weiteres Verfahren zur Bestimmung eines Schädigungsgrades eines Drahtseils ist aus CN 105 929 018 A bekannt. Das aus CN 105 929 018 A bekannte Drahtseil wird nicht gekrümmt, sondern gerade an vier Sensoren, die in einer Seilumfangsrichtung nebeneinander angeordnet sind, vorbeigeführt.

Aus US 2019/0218062 A1 ist ein Verfahren zur Prüfung eines synthetischen Faserseils bekannt.

Es ist eine Aufgabe der vorliegenden Erfindung, die Prüfung von Drahtseilen auf ihre Integrität weiter zu verbessern, insbesondere die Betriebssicherheit von Drahtseilanordnungen mit einem Drahtseil zu erhöhen, Stillstandszeiten zu minimieren und/oder das Risiko, dass der Gesamtzustand des Drahtseils falsch, insbesondere als zu gut, eingeschätzt wird, zumindest zu verringern.

Diese Aufgabe wird gelöst durch ein Verfahren und eine Vorrichtung zur Überwachung der Integrität eines Drahtseils in einer Drahtseilanordnung sowie eine Drahtseilanordnung mit einer solchen Vorrichtung gemäß den unabhängigen Ansprüchen.

Das Drahtseil wird gekrümmt an der Sensoreinrichtung, die als Seilscheibe oder Seiltrommel ausgebildet oder darin integriert ist, vorbeibewegt, wobei das erzeugte Sensorsignal der durch einen Positionsencoder der Seilscheibe oder Seiltrommel erfassten Lage des Drahtseils relativ zur Sensoreinrichtung zugeordnet und das Maß für die Integrität des Drahtseils auf Grundlage dieser Zuordnung ermittelt wird.

Mit anderen Worten wird das Drahtseil im Bereich der Sensoreinrichtung, d. h. in einem zur Sensoreinrichtung benachbarten Abschnitt, gebogen. Zum Beispiel kann das Drahtseil im Bereich der Sensoreinrichtung über eine Seilscheibe geführt werden. Dabei krümmt sich das Drahtseil zumindest abschnittsweise um die Sensoreinrichtung, die in die Seilscheibe integriert bzw. als solche ausgebildet ist.

Durch die Krümmung des Drahtseils wird es dabei ermöglicht, Information bezüglich der Integrität des Drahtseils in einem besonders belasteten Zustand zu ermitteln, d. h. an einer Stelle besonders starker Belastung. Da davon auszugehen ist, dass die Integrität des Seils gerade an solchen Stellen starker Belastung beeinträchtigt wird, kann somit das Risiko, dass der Gesamtzustand des Drahtseils falsch, insbesondere als zu gut, eingeschätzt wird, zumindest verringert werden.

Die Lage des Drahtseils relativ zur Sensoreinrichtung wird mithilfe eines Positionsencoders eines Drahtseillagers, insbesondere einer Seilscheibe, erfasst. Ein solcher Positionsencoder kann beispielsweise eine Beschleunigung, eine (Rotations-)Geschwindigkeit und/oder eine Orientierung bzw. Lage des Drahtseillagers erfassen. Die Anzahl der damit detektierten Umdrehungen des Drahtseillagers lässt sich dann auf die Lage des Drahtseils relativ zur Sensoreinrichtung übertragen.

Dies ist besonders vorteilhaft, wenn die Sensoreinrichtung als Drahtseillager ausgebildet ist. In diesem Fall kann die Beschleunigung, die (Rotations-)Geschwindigkeit und/oder die Orientierung bzw. Lage der Sensoreinrichtung erfasst und der Ermittlung des Maßes für die Integrität des Drahtseils zugrunde gelegt werden.

Das erzeugte Sensorsignal, insbesondere das ermittelte Maß für die Integrität des Drahtseils, der erfassten Lage des Drahtseils wird relativ zur Sensoreinrichtung zugeordnet. Insbesondere kann dem erzeugten Sensorsignal der gegenwärtig an der Sensoreinrichtung vorbeibewegte Abschnitt des Drahtseils zugeordnet werden. Dadurch lässt sich beispielsweise nachvollziehen, wie oft das Drahtseil bzw. der Abschnitt an der Sensoreinrichtung vorbeibewegt wurde, d. h. wie oft für diesen Abschnitt das Integritätsmaß bereits ermittelt wurde. Insbesondere kann das Integritätsmaß so mit einer Nutzungsdauer bzw. Nutzungszyklen verknüpft werden. Dies erlaubt eine besonders präzise Beurteilung des Zustands des Drahtseils.

Es ist dabei auch denkbar, dass so ein Verlauf des Integritätsmaßes für diesen Abschnitt ermittelt wird. Gegebenenfalls können für verschiedene Abschnitte ermittelte Integritätsmaße auch miteinander verglichen werden. Dadurch lässt sich beispielsweise rechtzeitig erkennen, dass sich ein Abschnitt schneller oder stärker abnutzt als andere Abschnitte. So kann der Gesamtzustand des Drahtseils besonders differenziert beurteilt und Defekte im Seil, insbesondere die Entwicklung von Defekten, frühzeitig erkannt werden.

Das Maß für die Integrität des Drahtseils wird auf Grundlage der Zuordnung des Sensorsignals zur Lage des Drahtseils relativ zur Sensoreinrichtung ermittelt.Zweckmäßigerweise wird dabei anhand der Lage des Drahtseils die Anzahl an Krümmungen im Bereich eines Drahtseillagers ermittelt und neben dem Sensorsignal der Ermittlung des Integritätsmaßes zugrunde gelegt. Dadurch kann eine mechanische Abnutzung des Drahtseils, selbst wenn diese noch keinen oder nur einen geringen Einfluss auf das Sensorsignal hat, berücksichtigt werden.

Bei einem Verfahren zur Überwachung der Integrität eines Drahtseils in einer Drahtseilanordnung wird (i) das Drahtseil gekrümmt an einer Sensoreinrichtung vorbeibewegt, (ii) mithilfe der Sensoreinrichtung ein Sensorsignal erzeugt, welches eine magnetische Wechselwirkung zwischen der Sensoreinrichtung und dem an der Sensoreinrichtung vorbeibewegten, gekrümmten Drahtseil charakterisiert, und (iii) auf Grundlage des erzeugten Sensorsignals ein Maß für die Integrität des Drahtseils, im Folgenden gelegentlich auch kurz als Integritätsmaß bezeichnet, ermittelt. Erfindungsgemäß wird die Bewegung des Drahtseils dabei in einem Normalbetrieb der Drahtseilanordnung erzeugt.

Ein Aspekt der Erfindung basiert auf dem Ansatz, mithilfe einer magnetbasierten Detektionsmethode eine Information über den Zustand eines Drahtseils einer Drahtseilanordnung zu erzeugen bzw. bereitzustellen, und zwar vorzugsweise im Normal- bzw. Regelbetrieb der Drahtseilanordnung. Mit anderen Worten kann die Drahtseilanordnung, zum Beispiel eine Seilbahnanlage oder eine Hubanlage wie etwa ein Kran, während einer Messung wenigstens einer Größe, auf deren Grundlage die Integrität des Drahtseils beurteilt werden kann, unbeeinträchtigt, insbesondere unterbrechungsfrei, (weiter) betrieben werden. Dazu wird das Drahtseil in bevorzugter Weise an einer, bevorzugt stationären, Sensoreinrichtung derart vorbeibewegt, zum Beispiel abschnittsweise durch die oder entlang der Sensoreinrichtung geführt, dass die Sensoreinrichtung ein Sensorsignal erzeugt. Somit kann das Drahtseil im Wesentlichen kontinuierlich überwacht werden. Dadurch wird insbesondere eine hohe Betriebssicherheit ermöglicht. Zudem kann die Drahtseilanordnung auch besonders wirtschaftlich betrieben werden, da keine Stillstandszeiten zu Wartungszwecken notwendig sind.

Um die Detektion im Normalbetrieb der Drahtseilanordnung zu ermöglichen, ist die Sensoreinrichtung in ein Bauteil der Drahtseilanordnung integriert sein. Insbesondere kann die Sensoreinrichtung als Bauteil der Drahtseilanordnung ausgebildet sein. Bei einer Hubanlage, etwa bei einem Kran, kann die Sensoreinrichtung zum Beispiel in eine Seilscheibe oder eine Seiltrommel integriert werden bzw. als solche ausgebildet sein. Dadurch lässt sich das Drahtseil unabhängig vom Betriebszustand der Drahtseilanordnung auf einfache Weise zur Erzeugung des Sensorsignals an der Sensoreinrichtung gekrümmt vorbeibewegen.

Das Sensorsignal charakterisiert in bevorzugter Weise eine magnetische Wechselwirkung zwischen der Sensoreinrichtung und dem bewegten Drahtseil, insbesondere deren Stärke. Die Stärke der Wechselwirkung bzw. das entsprechende Sensorsignal kann als Ausgangs- oder zumindest als Anhaltspunkt für die Integrität des Drahtseils dienen, zum Beispiel für seine Beschaffenheit insbesondere im nicht sichtbaren Innenteil des Drahtseils, d. h. innerhalb seines Mantels. Insbesondere kann auf Grundlage des Signals beurteilt werden, ob ein Draht des Drahtseils gebrochen oder zumindest beschädigt ist.

Die magnetische Wechselwirkung kann zum Beispiel mithilfe eines Induktivitätssensors erfasst werden, welcher das entsprechende Sensorsignal erzeugt. Der Induktivitätssensor ist dann zweckmäßigerweise dazu eingerichtet, die Induktivitäten des Drahtseils zum Beispiel mittels eines auch als "Testfeld" bezeichneten, auf das Drahtseil einwirkenden Magnetfelds zu messen. Alternativ kann die magnetische Wechselwirkung auch mit einem Magnetsensor, zum Beispiel einem Hall-Sensor, erfasst werden. Der Magnetsensor ist dann zweckmäßigerweise dazu eingerichtet, die magnetische Feldstärke eines durch das Drahtseil erzeugten oder beeinflussten Magnetfelds zu messen.

Mithilfe der Sensoreinrichtung kann die Integrität des Drahtseils, bzw. ein Maß dafür, auch magnetinduktiv ermittelt werden. Mit anderen Worten kann durch die Sensoreinrichtung eine magnetinduktive Messung am Drahtseil vorgenommen werden. Dabei wird vorzugsweise eine Sättigungsmagnetisierung des Drahtseils erzeugt und der magnetische Fluss durch den Querschnitt des Drahtseils ermittelt. Zu diesem Zweck kann die Sensoreinrichtung eine Streufeldspule oder eine Hall-Anordnung (Hall-Sensor) zum Detektieren eines Streufelds aufweisen, aus dem wiederum der magnetische Fluss abgeleitet werden kann. Beim Sensorsignal kann es sich entsprechend um ein magnetisches Signal handeln, welches den magnetischen Fluss durch den Querschnitt des Drahtseils charakterisiert.

Es sind aber auch andere Messmethoden denkbar. Beispielswiese kann mithilfe einer auch als Tastkopf bezeichneten Sondenspule eine durch die Bewegung des Drahtseils relativ zur Sensoreinrichtung bewirkte Änderung eines Magnetfelds, dem das Drahtseil zumindest abschnittsweise ausgesetzt ist bzw. wird, erfasst und als Spannungssignal ausgegeben werden. Zu diesem Zweck ist die Sondenspule vorzugsweise um einen Permanentmagneten zur Erzeugung des Magnetfelds gewickelt. Beim Sensorsignal kann es sich entsprechend um ein induktives Signal handeln, das eine Stärke der erfassten Änderung charakterisiert. Nachfolgend werden bevorzugte Ausführungsformen der Erfindung und deren Weiterbildungen beschrieben, die jeweils, soweit dies nicht ausdrücklich ausgeschlossen wird, beliebig miteinander sowie mit den im Weiteren beschriebenen Aspekten der Erfindung kombiniert werden können.

Erfindungsgemäß wird eine Lage des Drahtseils relativ zur Sensoreinrichtung erfasst und der Ermittlung des Maßes für die Integrität des Drahtseils zugrunde gelegt. Eine Lage des Drahtseils relativ zur Sensoreinrichtung ist hierbei vorzugsweise durch den Abschnitt definiert, der gerade im Bereich der Sensoreinrichtung angeordnet ist bzw. an ihr vorbewegt wird. D. h. die Lage des Drahtseils relativ zur Sensoreinrichtung kann sich ändern, wenn das Drahtseil an der Sensoreinrichtung vorbeibewegt wird. In Kombination mit dem auf der magnetischen Wechselwirkung basierenden Sensorsignal erlaubt die erfasste Lage des Drahtseils relativ zur Sensoreinrichtung eine besonders differenzierte Beurteilung des Zustands des Drahtseils.

Beispielsweise kann anhand der erfassten Lage des Drahtseils relativ zur Sensoreinrichtung ermittelt werden, wie oft ein gegenwärtig von der Sensoreinrichtung erfasster Abschnitt des Drahtseils bereits über ein Drahtseillager, etwa eine Seilscheibe, gelaufen ist und dabei gekrümmt bzw. verbogen und damit besonders belastet wurde. Dabei können aus der Anzahl der entsprechenden Krümmungs- bzw. Biegewechsel, ebenso durch wie die magnetische Wechselwirkung zwischen Sensoreinrichtung und Drahtseil, Rückschlüsse auf den Zustand des Drahtseils gezogen werden. Mithilfe dieser Information lässt sich die Drahtseilintegrität noch umfassender beurteilen, zum Beispiel indem die ermittelte Anzahl der Krümmungs- bzw. Biegewechsel mit einer durch das Sensorsignal charakterisierten Stärke der magnetischen Wechselwirkung kombiniert, etwa verrechnet, wird.

Alternativ oder zusätzlich lässt sich durch die Erfassung der Lage des Drahtseils das ermittelte Integritätsmaß aber auch einem Abschnitt des Drahtseils zuordnen. Dadurch kann eine zeitliche Änderung der magnetischen Wechselwirkung detektiert, insbesondere verfolgt, und der Ermittlung des Integritätsmaßes zugrunde gelegt werden.

Um Vorhersagen zum Beispiel zur Lebensdauer des Drahtseils treffen zu können, ist es ebenso denkbar, durch die Zuordnung eine zeitliche Entwicklung des Integritätsmaßes zu ermitteln.

In einer weiteren bevorzugten Ausführungsform wird auf Grundlage des ermittelten Maßes für die Integrität des Drahtseils eine Prognose zur Entwicklung der Integrität des Drahtseils erstellt. Beispielsweise kann abgeschätzt werden, für wie viele Betriebszyklen das Drahtseil noch bedenkenlos einsetzbar ist, d. h. zum Beispiel ohne dass seine Integrität ein vorgegebenes Austauschkriterium erfüllt. Es kann auf Grundlage des ermittelten Integritätsmaßes etwa eine Zahl der noch akzeptablen, etwa bei der Führung über eine Seilscheibe auftretenden Biegewechsel des Drahtseils prognostiziert werden. Hierdurch kann nicht nur die Betriebssicherheit der Drahtseilanordnung weiter erhöht, sondern auch ein vorausschauender Betrieb realisiert werden. Insbesondere lassen sich somit frühzeitig Ersatzteile bestellen und/oder Wartungsarbeiten planen.

Dabei ist es zweckmäßig, wenn das ermittelte Maß für die Integrität des Drahtseils protokolliert wird, d. h. eine Historie bzw. ein Verlauf des Integritätsmaßes aufgezeichnet wird. Auf Grundlage dieses Protokolls bzw. der Historie kann eine besonders differenzierte und präzise Prognose erfolgen.

In einer weiteren bevorzugten Ausführungsform wird, insbesondere automatisiert, geprüft, ob das ermittelte Maß für die Integrität des Drahtseils ein Austauschkriterium erfüllt. Vorzugsweise wird auf Grundlage des Ergebnisses der Prüfung ein Austauschsignal ausgegeben. Dabei wird zweckmäßigerweise geprüft, ob das ermittelte Integritätsmaß einen vorgegebenen Integritätsschwellenwert erreicht oder unterschreitet. Ist dies der Fall, so kann das Ausgangssignal, zum Beispiel ein akustisches und/oder visuelles Warnsignal, ausgegeben werden. Dies ermöglicht eine rechtzeitige Stilllegung der Drahtseilanordnung, d. h. zum Beispiel bevor das Drahtseil vollständig reißt, in besonders zuverlässiger Weise.

Dabei kann das Austauschsignal, insbesondere als akustisches und/oder visuelles Warnsignal, an einen Benutzer ausgegeben werden, etwa an Betriebs- oder Wartungspersonal der Drahtseilanordnung. Alternativ oder zusätzlich kann das Austauschsignal, insbesondere als digitales bzw. Steuersignal, an eine Steuerungseinrichtung ausgegeben werden, welche zur Steuerung der Drahtseilanordnung eingerichtet ist. Dadurch lässt sich eine automatisierte Stilllegung der Drahtseilanordnung im Bedarfsfall erreichen.

In einer weiteren bevorzugten Ausführungsform wird das Maß für die Integrität des Drahtseils mithilfe einer künstlichen Intelligenz ermittelt. Dabei ist oder wird die künstliche Intelligenz, etwa ein neuronales Netz, vorzugsweise darauf trainiert, das erzeugte Sensorsignal, insbesondere Änderungen des Sensorsignals, mit einem vorgegebenen Sensorsignal zu vergleichen und aus dem Vergleich Rückschlüsse auf die Drahtseilintegrität zu ziehen. Dabei kann die künstliche Intelligenz zum Beispiel durch maschinelles Lernen trainiert sein oder werden. Mithilfe der künstlichen Intelligenz können insbesondere Muster im Sensorsignal, zum Beispiel in seinem zeitlichen Verlauf auftretende Muster, erkannt und der Ermittlung des Integritätsmaßes zugrunde gelegt werden. Auf diese Weise kann die im Sensorsignal, insbesondere in seinem zeitlichen Verlauf, enthaltene Information besonders effizient und umfassend genutzt werden. Damit ist auch eine Erhöhung der Aussagekraft des Integritätsmaßes möglich.

In einer weiteren bevorzugten Ausführungsform wird das ermittelte Maß für die Integrität des Drahtseils über eine Schnittstelle der Sensoreinrichtung in einem Netzwerk bereitgestellt. Das Integritätsmaß kann beispielsweise über das Internet of Things kommuniziert werden bzw. von Geräten, die an dieses Netzwerk angeschlossen sind, abrufbar sein. Damit ist es diesen Geräten zum Beispiel möglich, Einfluss auf den Betrieb der Drahtseilanordnung zu nehmen und/oder die bereitgestellte Information weiter zu verarbeiten und darauf basierende Prozesse anzustoßen. Es ist etwa denkbar, dass auf diese Weise Prognosen über den Seilbedarf und/oder Wartungspläne erstellt werden. Dies erlaubt eine weitreichende und effiziente Nutzung der ermittelten Informationen in Bezug auf das Drahtseil.

In einer weiteren bevorzugten Ausführungsform wird die Drahtseilanordnung, insbesondere automatisch, in Abhängigkeit des ermittelten Maßes für die Integrität des Drahtseils betrieben. Insbesondere kann die Drahtseilanordnung auf Grundlage des ermittelten Integritätsmaßes gesteuert werden. Beispielsweise kann der Betrieb der Drahtseilanordnung eingestellt oder zumindest unterbrochen werden, wenn das ermittelte Integritätsmaß ein vorgegebenes Austauschkriterium erfüllt. Zu diesem Zweck kann das ermittelte Integritätsmaß von einer Steuerungseinrichtung zur Steuerung eines Seilantriebs verarbeitet und der Steuerung zugrunde gelegt werden. Dadurch lässt sich eine weitreichende Automation und somit ein besonders sicherer Betrieb der Drahtseilanordnung erreichen.

In einer weiteren bevorzugten Ausführungsform dreht sich beim Erzeugen der magnetischen Wechselwirkung zwischen dem Drahtseil und der Sensoreinrichtung wenigstens eine zur Erzeugung des Sensorsignals eingerichtete, drehbar gelagerte Sensoreinheit der Sensoreinrichtung relativ zu einem stationären Bauteil der Drahtseilanordnung. Die wenigstens eine Sensoreinheit kann beispielsweise relativ zu einem Drahtseillager, insbesondere einer Seilscheibe, rotieren. Die wenigstens eine Sensoreinheit kann insbesondere relativ zur Sensoreinrichtung rotieren, wenn die Sensoreinheit als Seilscheibe ausgebildet ist. Durch die Bewegung der wenigstens einem Sensoreinheit relativ zum stationären Bauteil kann sichergestellt werden, dass die magnetische Wechselwirkung zwischen der Sensoreinrichtung und dem Drahtseil groß genug ist, um das Sensorsignal zuverlässig und insbesondere rauscharm erzeugen zu können.

Beispielsweise kann die als Seilscheibe ausgebildete Sensoreinrichtung mehrere entlang des Umfangs der Seilscheibe angeordnete Sensoreinheiten aufweisen, die jeweils um eine Rotationsachse relativ zur Seilscheibe drehbar gelagert sind. Dabei umfassen die Sensoreinheiten vorzugsweise jeweils ein Mittel zum Erzeugen eines Magnetfelds und damit der magnetischen Wechselwirkung zwischen der Sensoreinrichtung und dem Drahtseil, und einen Induktivitäts- oder Magnetfeldsensor zum Erfassen der Wechselwirkung und Erzeugen des Sensorsignals. Die Sensoreinheiten können aktiv oder passiv gedreht werden, zum Beispiel durch die Schwerkraft bei exzentrischer Lagerung um die Rotationsachse oder durch einen entsprechenden Antrieb, etwa ein Getriebe zum Übersetzen der Drehbewegung der Seilscheibe auf jede der Sensoreinheiten.

Eine Vorrichtung zur Überwachung der Integrität eines Drahtseils in einer Drahtseilanordnung gemäß einem zweiten Aspekt der Erfindung weist eine Sensoreinrichtung auf, die zum Erzeugen eines Sensorsignals eingerichtet ist, das eine magnetische Wechselwirkung zwischen der Sensoreinrichtung und dem an der Sensoreinrichtung vorbeibewegten Drahtseil charakterisiert. Die Drahtseilanordnung weist zudem ein stationäres Bauteil auf, in das die Sensoreinrichtung integriert ist, wobei die Sensoreinrichtung als Bauteil der Drahtseilanordnung ausgebildet ist, d. h. das Bauteil verkörpert.

Erfindungsgemäß ist die Sensoreinrichtung als Seilscheibe oder Seiltrommel ausgebildet und dazu eingerichtet, das Drahtseil zumindest abschnittsweise gekrümmt entlang ihres Umfangs zu führen, wobei die Vorrichtung einen Positionsencoder der Seilscheibe oder Seiltrommel umfasst, und wobei die Steuereinrichtung dazu eingerichtet ist, das erzeugte Steuersignal der durch den Positionsencoder erfassten Lage des Drahtseils relativ zu der Sensoreinrichtung zuzuordnen und der Ermittlung des Maßes für die Integrität zugrunde zu legen.

Ein stationäres Bauteil im Sinne der Erfindung ist hierbei insbesondere ein ortsgebundenes bzw. ortsfestes Bauteil, das sich im Normalbetrieb der Drahtseilanordnung nicht translatorisch bewegt. Dabei ist es jedoch nicht ausgeschlossen, dass das Bauteil zumindest teilweise eine anderweitige Bewegung ausführt, zum Beispiel rotiert.

In einer weiteren bevorzugten Ausführungsform ist das stationäre Bauteil ein Drahtseillager. Mit anderen Worten ist das Bauteil vorzugsweise dazu eingerichtet, das Drahtseil zumindest abschnittsweise zu lagern. Das Bauteil kann insbesondere dazu eingerichtet sein, das Drahtseil zumindest abschnittsweise abzustützen bzw. zu tragen. Dadurch kann erreicht werden, dass das Drahtseil im Normalbetrieb der Drahtseilanordnung an der Sensoreinrichtung zur Erzeugung des auf der magnetischen Wechselwirkung basierenden Sensorsignals vorbeiführbar ist. Zudem kann dadurch sichergestellt werden, dass das ermittelte Integritätsmaß mit einem Abschnitt des Drahtseils korrespondiert, in dem die Belastung des Drahtseils besonders hoch, insbesondere maximal, ist.

Das Drahtseillager ist als Seilscheibe oder Seiltrommel ausgebildet. Bei einer Seilscheibe oder Seiltrommel kann sich das Drahtseil unter Last zumindest abschnittsweise an einer Wange der Seilscheibe bzw. der Seiltrommel entlang bewegen. Dabei kann eine durch das Sensorsignal charakterisierte Stärke der magnetischen Wechselwirkung, zum Beispiel des magnetischen Flusses durch den Querschnitt des Drahtseils, ermittelt werden.

In einer weiteren bevorzugten Ausführungsform weist die Sensoreinrichtung mehrere Sensoreinheiten zur Erzeugung des Sensorsignals auf, die entlang eines Umfangs des Drahtseillagers angeordnet sind. Die Sensoreinheiten weisen vorzugsweise jeweils ein Mittel zum Erzeugen eines Magnetfelds, insbesondere zum Erzeugen einer Sättigungsmagnetisierung im Drahtseil, und/oder eine Streufeldspule zum Erfassen des magnetischen Flusses durch einen Querschnitt des Drahtseils auf. Durch eine Drehung können die Sensoreinheiten wiederholt in unmittelbare Nähe des Drahtseils gebracht werden, um dieses zum Beispiel zumindest abschnittsweise magnetisch zu sättigen und durch Detektion des resultierenden Streufelds den magnetischen Fluss durch den Querschnitt des Drahtseils ein entsprechendes Sensorsignal zu erzeugen.

Dabei können die Sensoreinheiten, insbesondere die Mittel zum Erzeugen des Magnetfelds, in wenigstens einer Wange der Seilscheibe angeordnet sein, insbesondere im Bereich einer zur Führung des Drahtseils ausgebildeten Nut der als Drahtseillager ausgebildeten Sensorvorrichtung. Solche Mittel zum Erzeugen des Magnetfelds können zum Beispiel Permanentmagnete, insbesondere Stabmagnete, sein, die sich besonders einfach in den Wangen des Drahtseillagers, zum Beispiel in entsprechenden Ausnehmungen, aufnehmen lassen.

Im Weiteren wird die Erfindung anhand von Figuren näher erläutert. Soweit zweckdienlich, sind hierin gleich wirkende Elemente mit gleichen Bezugszeichen versehen. Die Erfindung ist nicht auf die in den Figuren dargestellten Ausführungsbeispiele beschränkt - auch nicht in Bezug auf funktionale Merkmale. Die bisherige Beschreibung wie auch die nachfolgende Figurenbeschreibung enthalten zahlreiche Merkmale, die in den abhängigen Unteransprüchen teilweise zu mehreren zusammengefasst wiedergegeben sind. Diese Merkmale wie auch alle übrigen oben und in der nachfolgenden Figurenbeschreibung offenbarten Merkmale wird der Fachmann jedoch auch einzeln betrachten und zu sinnvollen weiteren Kombinationen zusammenfügen. Insbesondere sind alle genannten Merkmale jeweils einzeln und in beliebiger geeigneter Kombination mit dem Verfahren gemäß dem ersten Aspekt der Erfindung, der Vorrichtung gemäß dem zweiten Aspekt der Erfindung und der Drahtseilanordnung gemäß dem dritten Aspekt der Erfindung kombinierbar.

Es zeigen, zumindest teilweise schematisch:
- Fig. 1: ein erstes Beispiel einer Drahtseilanordnung mit einer Vorrichtung zur Überwachung der Integrität eines Drahtseils;
- Fig. 2: ein zweites Beispiel einer Drahtseilanordnung mit einer Vorrichtung zur Überwachung der Integrität eines Drahtseils;
- Fig. 3: ein Beispiel einer als Seilscheibe ausgebildeten Sensoreinrichtung aus einem ersten Blickwinkel;
- Fig. 4: die Sensoreinrichtung aus Fig. 3 aus einem zweiten Blickwinkel;
- Fig. 5: ein Beispiel einer als Seilscheibe ausgebildeten Sensoreinrichtung mit drehbar gelagerten Sensoreinheiten; und
- Fig. 6: ein Beispiel eines Verfahrens zur Überwachung der Integrität eines Drahtseils.

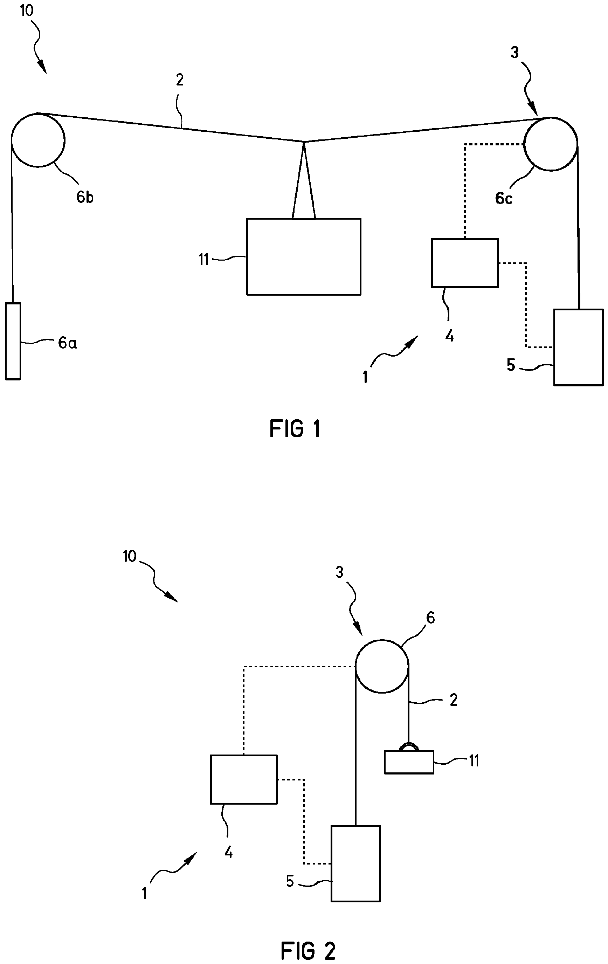

**Figur 1** zeigt ein erstes Beispiel einer Drahtseilanordnung 10 mit einem Drahtseil 2 und einer Vorrichtung 1 zur Überwachung der Integrität des Drahtseils 2 in einer Seitenansicht. Die Vorrichtung 1 weist eine Sensoreinrichtung 3 zur Erzeugung eines Sensorsignals, welches auf einer magnetischen Wechselwirkung zwischen der Sensoreinrichtung 3 und dem an der Sensoreinrichtung 3 vorbeibewegten Drahtseil 2 der Drahtseilanordnung 10 basiert, und eine Steuerungseinrichtung 4 zur Ermittlung eines Maßes für die Integrität des Drahtseils 2 auf Grundlage des Sensorsignals auf. Neben der Vorrichtung 1 weist die Drahtseilanordnung 10 auch einen Seilantrieb 5 zum Bewegen des Drahtseils 2 in einem Normalbetrieb der Drahtseilanordnung 10 und mehrere, im gezeigten Beispiel drei, Drahtseillager 6a, 6b, 6c auf. Dabei ist das Drahtseil 2 zwischen dem Seilantrieb 5 und einem ersten der Drahtseillager 6a aufgespannt und wird durch ein zweites und ein drittes der Drahtseillager 6b, 6c geführt.

Im vorliegenden Beispiel ist die Drahtseilanordnung 10 als Seilbahnanlage mit einer Last 11 in Form einer Kabine ausgebildet, welche vom Drahtseil 2 getragen wird und an dem Drahtseil 2 befestigt ist. Im Normalbetrieb kann die Kabine so durch den Seilantrieb 5 zusammen mit dem Drahtseil 2 bewegt werden.

Die Drahtseillager 6a, 6b und 6c sind im vorliegenden Beispiel als Seilscheiben ausgeführt, über die das Drahtseil 2 im Normalbetrieb der Drahtseilanordnung 10 zumindest abschnittsweise läuft. Das erste Drahtseillager 6a ist dabei im Wesentlichen um 90° relativ zum zweiten und dritten Drahtseillager 6b, 6c gedreht, sodass seine Rotationsachse im gezeigten Beispiel in der Figurenebene verläuft. Das Drahtseil 2 ist als Endlosseil ausgebildet, das vom Seilantrieb 5 zum ersten Drahtseillager 6a und wieder zurück läuft. Der Seilantrieb 5 kann zu diesem Zweck ein weiteres, von einem Motor angetriebenes Seillager aufweisen, über welches das Drahtseil 2 geführt ist (nicht gezeigt). Der zurücklaufende Abschnitt des Drahtseils 2, der im Wesentlichen parallel zum hinlaufenden Abschnitt verläuft, ist in Figur 1 aus Gründen der Übersichtlichkeit nicht eingezeichnet.

Bei den Drahtseillagern 6a, 6b und 6c handelt es sich vorzugsweise um stationäre Bauteile der Drahtseilanordnung 10, die im Normalbetrieb der Drahtseilanordnung 10 im Wesentlichen keiner translatorischen Bewegung unterworfen sind. Mit anderen Worten sind die Drahtseillager 6a, 6b und 6c zwar rotierbar gelagert, aber im Wesentlichen ortsfest angeordnet bzw. montiert.

Wie in Figur 1 gezeigt ist die Sensoreinrichtung 3 vorzugsweise in das dritte Drahtseillager 6c integriert. Insbesondere ist die Sensoreinrichtung 3 in Form eines Drahtseillagers ausgebildet, sodass sie als drittes Drahtseillager 6c verwendet werden kann. Da das Drahtseil 2 somit im Normalbetrieb immer wieder an der Sensoreinrichtung 3 vorbei läuft, kann die Integrität des Drahtseils 2 im Normalbetrieb der Drahtseilanordnung 10 überwacht werden. Das Vorsehen einer zusätzlichen, externen Prüfvorrichtung ist nicht notwendig, ebenso wie das Stilllegen der Drahtseilanordnung 10 zu Wartungszwecken.

Neben der Ermittlung des Integritätsmaßes ist die Steuerungseinrichtung 4 auch dazu eingerichtet, den Seilantrieb 5 und damit die Bewegung des Seiles 2 bzw. der Last 11 in Form der Kabine zu steuern. Um die Betriebssicherheit zu erhöhen, kann die Steuerungseinrichtung 4 dabei dazu eingerichtet sein zu prüfen, ob das ermittelte Integritätsmaß ein vorgegebenes Austauschkriterium erfüllt. Ist dies der Fall, d. h. erreicht oder unterschreitet das ermittelte Integritätsmaß zum Beispiel einen vorgegebenen Integritätsschwellenwert, kann die Steuerungseinrichtung 4 den Betrieb der Drahtseilanordnung 10 einstellen, bis das Drahtseil 2 ausgetauscht oder zumindest einer weiteren Wartung unterzogen und/oder repariert wurde.

**Figur 2** zeigt ein zweites Beispiel einer Drahtseilanordnung 10 mit einem Drahtseil 2 und einer Vorrichtung 1 zur Überwachung der Integrität des Drahtseils 2 in einer Seitenansicht. Hierbei ist die Drahtseilanordnung 10 als Hubanlage ausgebildet, die zum Heben einer am Drahtseil 2 befestigten Last 11 eingerichtet ist.

Analog zum in Figur 1 gezeigten Beispiel weist die Vorrichtung 1 eine Sensoreinrichtung 3 zur Erzeugung eines Sensorsignals, welches auf einer magnetischen Wechselwirkung zwischen der Sensoreinrichtung 3 und dem an der Sensoreinrichtung 3 vorbeibewegten Drahtseil 2 der Drahtseilanordnung 10 basiert, und eine Steuerungseinrichtung 4 zur Ermittlung eines Maßes für die Integrität des Drahtseils 2 auf Grundlage des Sensorsignals auf. Neben der Vorrichtung 1 weist die Drahtseilanordnung 10 auch einen Seilantrieb 5 zum Bewegen des Drahtseils 2 in einem Normalbetrieb der Drahtseilanordnung 10 auf.

Die Sensoreinrichtung 3 ist dabei in ein Drahtseillager 6 der Drahtseilanordnung 10 integriert. Dadurch kann das Drahtseil 2 im Normalbetrieb der Drahtseilanordnung 10 an der Sensoreinrichtung 3 vorbeigeführt werden.

Bei der in Figur 2 gezeigten Hubanlage kann es sich beispielsweise um einen Kran handeln. Das Drahtseillager 6 mit der Sensoreinrichtung 3 kann dabei auch Teil eines Lagersystems, zum Beispiel eines Flaschenzugs oder dergleichen, sein.

Auch hier kann die Steuerungseinrichtung 4 zur Steuerung des Seilantriebs 5 auf Grundlage des ermittelten Integritätsmaßes sein.

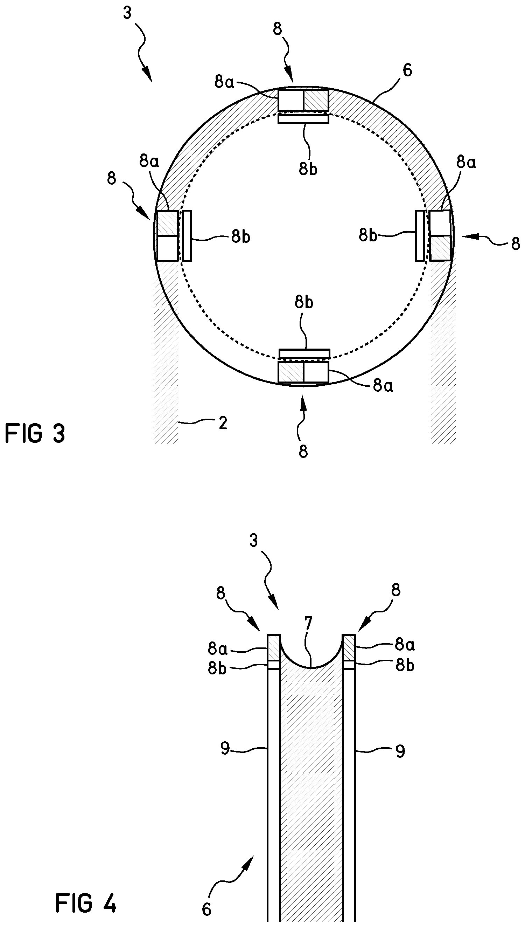

**Figur 3** zeigt eine als Seilscheibe 6 ausgebildete Sensoreinrichtung 3 zur Überwachung eines Drahtseils 2 einer Drahtseilanordnung aus einem ersten Blickwinkel. Die Seitenfläche der Seilscheibe 6 verläuft dabei in der Figurenebene.

Die Sensoreinrichtung 3 ist dazu eingerichtet, das Drahtseil 2 zumindest abschnittsweise entlang ihres Umfangs zu führen. Zu diesem Zweck weist die Sensorrichtung 3 eine entlang ihres Umfangs verlaufende Nut 7 zur zumindest teilweisen Aufnahme des Drahtseils 2 auf. Der Boden der Nut ist in Figur 2 als gestrichelte Linie dargestellt.

Dadurch, dass die Sensoreinrichtung 3 das Drahtseil 2 mithilfe der Nut 7 zumindest abschnittsweise führt, wird das Drahtseil 2 in einem Normalbetrieb der Drahtseilanordnung an der Sensoreinrichtung 3 vorbeigeführt. Dabei wird das Drahtseil 2 in dem Abschnitt, in dem es die Sensoreinrichtung 3 kontaktiert, gekrümmt bzw. gebogen.

Die Sensoreinrichtung 3 ist dazu eingerichtet, auf Grundlage einer magnetischen Wechselwirkung zwischen der Sensoreinrichtung 3 und dem an der Sensoreinrichtung 3 vorbeibewegten Drahtseil 2 ein Sensorsignal zu erzeugen, auf dessen Grundlage ein Maß für die Integrität des Drahtseils 2 ermittelt werden kann. Zu diesem Zweck kann die Sensoreinrichtung 3 mehrere, entlang ihrem Umfang angeordnete Sensoreinheiten 8 aufweisen, mit deren Hilfe die Sensoreinrichtung 3 beispielsweise magnetinduktive Messungen am Drahtseil 2 vornehmen kann.

Im gezeigten Beispiel weisen die Sensoreinheiten 8 zu diesem Zweck jeweils ein Mittel 8a zum Erzeugen eines Magnetfelds, etwa in Form eines Permanentmagneten, und eine Streufeldspule 8b auf. Mit den Mitteln 8a zum Erzeugen eines Magnetfelds kann eine Sättigungsmagnetisierung des Drahtseils 2 im Bereich des jeweiligen Mittels 8a erreicht werden. Die Streufeldspulen 8b sind zweckmäßigerweise jeweils dazu eingerichtet, den dabei erzeugten magnetischen Fluss durch den Querschnitt des Drahtseils 2 zu erfassen. Sind einzelne der Drähte, aus denen das Drahtseil 2 gewunden oder geflochten ist, beschädigt oder gar gebrochen, sinkt der durch den Querschnitt verlaufende magnetische Fluss. Die von den Streufeldspuren 8b beim Erfassen des magnetischen Flusses erzeugten elektrischen Signale können daher als der Ermittlung eines Ma-ßes für die Integrität des Drahtseils 2 zugrunde gelegt werden.

Erfindungsgemäß sind die Sensoreinheiten 8 auch Teil eines Positionsencoders der Seilscheibe 6 bzw. Sensoreinrichtung 3, der zum Erfassen der Orientierung bzw. der Lage der Seilscheibe 6 bzw. Sensoreinrichtung 3 eingerichtet ist. Die Sensoreinheiten 8 können zu diesem Zweck beispielsweise Beschleunigungs- und/oder Geschwindigkeitssensoren (nicht gezeigt) aufweisen, mit deren Hilfe eine Beschleunigung bzw. Geschwindigkeit der Seilscheibe 6 bzw. Sensoreinrichtung 3 ermittelbar ist. Aus der erfassten Beschleunigung bzw. Geschwindigkeit lässt sich dann die Orientierung bzw. Lage der Seilscheibe 6 bzw. Sensoreinrichtung 3 ableiten. Zum Beispiel kann so die Anzahl der von der Seilscheibe 6 bzw. Sensoreinrichtung 3 durchgeführten Umdrehungen gezählt werden. Diese Information korrespondiert mit der Lage des Drahtseils 2 relativ zur Sensoreinrichtung 3, insbesondere eines Abschnitts des Drahtseils 2. Dadurch ist es möglich, das ermittelte Integritätsmaß diesem Abschnitt des Drahtseils 2 zuzuordnen und zum Beispiel die Entwicklung bzw. den Verlauf der Integrität in diesem Abschnitt zu verfolgen. Gegebenenfalls kann diese Information aber auch bei der Ermittlung des Integritätsmaßes berücksichtigt werden, etwa indem die Anzahl der durch die Seilscheibe 6 bedingten Biegezyklen in die Berechnung des Integritätsmaßes einfließt.

**Figur 4** zeigt die als Seilscheibe 6 ausgebildete Sensoreinrichtung 3 aus Figur 3 aus einem zweiten Blickwinkel, der um 90° vom ersten Blickwinkel verschieden ist. Die Seitenfläche der Seilscheibe 6 verläuft dabei senkrecht zur Figurenebene. Das Drahtseil ist in Figur 4 nicht dargestellt.

In Figur 4 ist gut zu erkennen, dass die Sensoreinheiten 8 im Bereich der Nut 7 der Sensoreinrichtung 3 angeordnet sind, d. h. in einem radial äußeren Bereich der Sensoreinrichtung 3. Dabei sind die Sensoreinheiten 8 in die einander gegenüberliegenden, die Nut 7 seitlich begrenzenden Wangen 9 der von der Sensoreinrichtung 3 gebildeten Seilscheibe 6 eingelassen, um das den Querschnitt des von der Nut 7 aufgenommenen Drahtseils durchtretende Magnetfeld zu erzeugen.

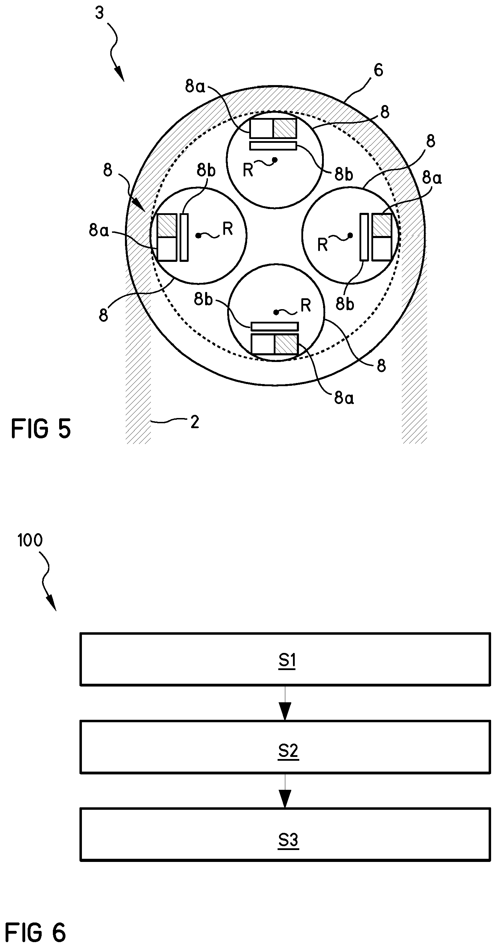

**Figur 5** zeigt ein Beispiel einer als Seilscheibe 6 ausgebildeten Sensoreinrichtung 3 mit drehbar gelagerten Sensoreinheiten 8. Analog zum in Figur 3 gezeigten Beispiel ist die Sensoreinrichtung 3 dazu eingerichtet, ein Drahtseil 2 zumindest abschnittsweise entlang ihres Umfangs zu führen. Dabei wird das Drahtseil in einem Normalbetrieb einer entsprechenden Drahtseilanordnung an der Sensoreinrichtung 3 vorbeigeführt und in dem Abschnitt, in dem es die Sensoreinrichtung 3 kontaktiert, gekrümmt bzw. gebogen. Die Sensoreinrichtung 3 ist dazu eingerichtet, ein Sensorsignal auf Grundlage einer magnetischen Wechselwirkung zwischen der Sensoreinrichtung 3 und dem Drahtseil 2 zu erzeugen, auf dessen Grundlage ein Maß für die Integrität des Drahtseils 2 ermittelt werden kann.

Mehrere entlang des Umfangs der Sensoreinrichtung 3 angeordnete Sensoreinheiten 8 weisen jeweils ein Mittel 8a zum Erzeugen eines Magnetfelds und eine Streufeldspule 8b zum Erfassen eines mithilfe des Mittels 8a erzeugten magnetischen Flusses durch den Querschnitt des Drahtseils 2 auf.

Im Unterschied zum in Figur 3 gezeigten Beispiel sind die vorliegenden Sensoreinheiten 8 jeweils um eine Rotationsachse R drehbar gelagert. Die Mittel 8a und Streufeldspulen 8b können zum Beispiel auf entsprechend rotierbaren Trägern montiert sein. Dadurch können die Sensoreinheiten 8, insbesondere die Mittel 8a zum Erzeugen eines Magnetfelds, zusätzlich relativ zum Drahtseil 2 bewegt werden, insbesondere auch bei ruhender Seilscheibe 6. Infolgedessen kann nicht nur auch bei ruhender Seilscheibe 6 in dem sich im Bereich der Sensoreinrichtung 3 befindlichen Abschnitt des Drahtseils 2 eine für die Integrität des Drahtseils 2 charakteristische magnetische Wechselwirkung aufgrund eines sich ändernden Magnetfelds, zum Beispiel eine Induktivität, erfasst werden, sondern vorteilhaft auch bei sich langsam drehender Seilscheibe 6. Es kann insbesondere sichergestellt werden, dass eine Änderung des magnetischen Flusses im Drahtseil 2 aufgrund einer relativen Rotation der Mittel 8a zum Erzeugen eines Magnetfelds um die Rotationsachsen R groß genug ist, dass sich mit den Streufeldspulen 8b ein entsprechendes verwertbares Sensorsignal erzeugen lässt.

Dabei können die Sensoreinheiten 8 aktiv oder passiv drehbar relativ zur Sensoreinrichtung 3 bzw. zur Seilscheibe 6 ausgebildet sein. Die Sensoreinheiten 8 können zum Beispiel frei rotierbar gelagert sein, sodass sie automatisch aufgrund der Schwerkraft bei einer Rotation der Sensoreinrichtung 3 um die mit der Sensoreinrichtung 3 rotierenden Rotationsachse R rotieren. Zu diesem Zweck ist es auch denkbar, die Sensoreinheiten 8 exzentrisch drehbar um die Rotationsachsen R zu lagern. Die passive Rotation hat den Vorteil, dass sie aufwandsarm und energieeffizient realisierbar ist.

Alternativ können die Sensoreinheiten 8 mithilfe eines entsprechenden Antriebs aktiv um die Rotationsachsen R gedreht werden. Dies hat gegenüber einer passiven Rotation den Vorteil, dass die Rotationsgeschwindigkeit der Sensoreinheiten 8 und damit zum Beispiel die Änderung des mithilfe der Mittel 8a erzeugten magnetischen Flusses im Drahtseil 2 steuerbar ist. Gegebenenfalls lässt sich hierdurch die magnetische Wechselwirkung zwischen der Sensoreinrichtung 3, insbesondere den Sensoreinheiten 8, derart verstärken, dass ein rauscharmes Signal erzeugbar ist.

**Figur 6** zeigt ein Beispiel eines Verfahrens 100 zur Überwachung eines Drahtseils einer Drahtseilanordnung.

Dabei wird das Drahtseil in einem Verfahrensschritt S1 an einer Sensoreinrichtung vorbeibewegt, und zwar in einem Normalbetrieb der Drahtseilanordnung. Zu diesem Zweck ist die Sensoreinrichtung in ein stationäres Bauteil der Drahtseilanordnung, welches vorzugsweise zum Tragen bzw. Führen des Drahtseils eingerichtet ist, integriert oder bildet sogar dieses Bauteil.

In einem zweiten Verfahrensschritt S2 wird mithilfe der Sensoreinrichtung ein Sensorsignal erzeugt, welches eine magnetische Wechselwirkung zwischen der Sensoreinrichtung und dem an der Sensoreinrichtung vorbeibewegten Drahtseil charakterisiert. Beispielsweise kann ein magnetischer Fluss durch einen Querschnitt des Drahtseils im Bereich der Sensoreinrichtung erfasst und ein entsprechendes, auch magnetinduktiv genanntes Signal erzeugt werden. Alternativ kann zum Beispiel eine Änderung eines vom Drahtseil durchdrungenen Magnetfelds erfasst und ein entsprechendes, auch induktiv genanntes Signal erzeugt werden. Dabei wird die Lage des Drahtseils durch einen Positionsencoder erfasst.

In einem weiteren Verfahrensschritt S3 wird, zum Beispiel mithilfe einer Steuerungseinrichtung, ein Maß für die Integrität des Drahtseils auf Grundlage des erzeugten Sensorsignals ermittelt, das der erfassten Lage des Drahtseils relativ zur Sensoreinrichtung zugeordnet ist. Dieses Integritätsmaß kann zum Beispiel der Steuerung der Drahtseilanordnung zugrunde gelegt werden. Alternativ oder zusätzlich können mithilfe des Integritätsmaßes, insbesondere einer zeitlichen Entwicklung bzw. Historie des zu diesem Zweck vorzugsweise aufgezeichneten Integritätsmaßes, auch Wartungsarbeiten bzw. Reparaturen an der Drahtseilanordnung, insbesondere dem Drahtseil, geplant werden.

### Bezugszeichenliste

- 1: Vorrichtung
- 2: Drahtseil
- 3: Sensoreinrichtung
- 4: Steuerungseinrichtung
- 5: Seilantrieb
- 6, 6a-c: Drahtseillager
- 7: Nut
- 8: Sensoreinheit
- 8a: Mittel zum Erzeugen eines Magnetfelds
- 8b: Streufeldspule
- 9: Wange

- 10: Drahtseilanordnung
- 11: Last

- 100: Verfahren

- S1-S3: Verfahrensschritt

- R: Rotationsachse

## Patentansprüche

1. Verfahren (100) zur Überwachung der Integrität eines Drahtseils (2) in einer Drahtseilanordnung (10), wobei
- das Drahtseil (2) an einer Sensoreinrichtung (3) vorbeibewegt wird (S1),
- mithilfe der Sensoreinrichtung (3) ein Sensorsignal, das eine magnetische Wechselwirkung zwischen der Sensoreinrichtung (3) und dem an der Sensoreinrichtung (3) vorbeibewegten Drahtseil (2) charakterisiert, erzeugt (S2) wird, und
- auf Grundlage des erzeugten Sensorsignals ein Maß für die Integrität des Drahtseils (2) ermittelt wird (S3), wobei die Bewegung des Drahtseils (2) in einem Normalbetrieb der Drahtseilanordnung (10) erzeugt wird (S1),
**dadurch gekennzeichnet,**
**dass** das Drahtseil (2) gekrümmt an der Sensoreinrichtung (3), die als Seilscheibe (6; 6c) oder Seiltrommel ausgebildet oder in eine Seilscheibe oder eine Seiltrommel integriert ist, vorbeibewegt wird, wobei das erzeugte Sensorsignal der durch einen Positionsencoder der Seilscheibe oder Seiltrommel erfassten Lage des Drahtseils (2) relativ zur Sensoreinrichtung (3) zugeordnet und das Maß für die Integrität des Drahtseils (2) auf Grundlage dieser Zuordnung ermittelt wird.

2. Verfahren (100) nach einem der vorangehenden Ansprüche,
**dadurch gekennzeichnet,**
**dass** auf Grundlage des ermittelten Maßes für die Integrität des Drahtseils (2) eine Prognose zur Entwicklung der Integrität des Drahtseils (2) erstellt wird.

3. Verfahren (100) nach einem der vorangehenden Ansprüche,
**dadurch gekennzeichnet,**
**dass** geprüft wird, ob das ermittelte Maß für die Integrität des Drahtseils (2) ein Austauschkriterium erfüllt und auf Grundlage des Ergebnisses der Prüfung ein Austauschsignal ausgegeben wird.

4. Verfahren (100) nach einem der vorangehenden Ansprüche,
**dadurch gekennzeichnet,**
**dass** das Maß für die Integrität des Drahtseils (2) mithilfe einer künstlichen Intelligenz ermittelt wird.

5. Verfahren (100) nach einem der vorangehenden Ansprüche,
**dadurch gekennzeichnet,**
**dass** das ermittelte Maß für die Integrität des Drahtseils (2) über eine Schnittstelle der Sensoreinrichtung (3) in einem Netzwerk bereitgestellt wird.

6. Verfahren (100) nach einem der vorangehenden Ansprüche,
**dadurch gekennzeichnet,**
**dass** die Drahtseilanordnung (10) in Abhängigkeit des ermittelten Maßes für die Integrität des Drahtseils (2) betrieben wird.

7. Verfahren (100) nach einem der vorangehenden Ansprüche, **dadurch gekennzeichnet,**
**dass** beim Erzeugen der magnetischen Wechselwirkung zwischen dem Drahtseil (2) und der Sensoreinrichtung (3) wenigstens eine zur Erzeugung des Sensorsignals eingerichtete, drehbar gelagerte Sensoreinheit (8) der Sensoreinrichtung (3) relativ zu einem stationären Bauteil der Drahtseilanordnung (10) gedreht wird.

8. Vorrichtung (1) zur Überwachung der Integrität eines Drahtseils (2) in einer Drahtseil anordnung (10), mit einer Sensoreinrichtung (3), die zum Erzeugen eines Sensorsignals eingerichtet ist, das eine magnetische Wechselwirkung zwischen der Sensoreinrichtung (3) und dem an der Sensoreinrichtung (3) vorbeibewegten Drahtseil (2) basiert, wobei die Vorrichtung ein stationäres Bauteil der Drahtseilanordnung (10), in das die Sensoreinrichtung (3) integriert ist, aufweist
**dadurch gekennzeichnet,**
**dass** die Sensoreinrichtung (3) als Seilscheibe (6; 6c) oder Seiltrommel ausgebildet und dazu eingerichtet ist, das Drahtseil (2) zumindest abschnittsweise gekrümmt entlang ihres Umfangs zu führen, wobei die Vorrichtung einen Positionsencoder der Seilscheibe oder Seiltrommel umfasst, und wobei die Steuereinrichtung dazu eingerichtet ist, das erzeugte Steuersignal der durch den Positionsencoder erfassten Lage des Drahtseils relativ zu der Sensoreinrichtung zuzuordnen und der Ermittlung des Maßes für die Integrität zugrunde zu legen.

9. Vorrichtung (1) nach Anspruch 8
**dadurch gekennzeichnet,**
**dass** die Sensoreinrichtung (3) mehrere Sensoreinheiten (8) zur Erzeugung des Sensorsignals aufweist, die entlang eines Umfangs der Seilscheibe (6; 6c) oder der Seiltrommel angeordnet sind.

10. 11. Drahtseilanordnung (10), insbesondere Hubanlage, mit einer Vorrichtung (1) nach einem der Ansprüche 8 bis 9.

## Claims

1. Method (100) for monitoring the integrity of a wire cable (2) of a wire cable assembly (10), wherein
- the wire cable (2) is moved past a sensor device (3) (S1),
- a sensor signal characterizing a magnetic interaction between the sensor device (3) and the wire cable (2) moved past the sensor device (3) is generated (S2) with the aid of the sensor device (3), and
- a measure of the integrity of the wire cable (2) is determined (S3) on the basis of the generated sensor signal, wherein the movement of the wire cable (2) is generated (S1) during normal operation of the wire cable assembly (10),
**characterized in that**
the wire cable (2) is moved past the sensor device (3), which is provided as a sheave (6; 6c) or cable drum or is integrated into a sheave or a cable drum, in a curved manner, the generated sensor signal being assigned to the position of the wire cable (2) relative to the sensor device (3) detected by a position encoder of the sheave or cable drum, and the measure of the integrity of the wire cable (2) being determined on the basis of this assignment.

2. A method (100) according to one of the preceding claims,
**characterized in that**
a forecast for the development of the integrity of the wire cable (2) is created on the basis of the determined measure for the integrity of the wire cable (2).

3. A method (100) according to any one of the preceding claims,
**characterized in that**
it is checked whether the determined measure for the integrity of the wire cable (2) fulfills an exchange criterion and an exchange signal is output on the basis of the result of the check.

4. A method (100) according to any one of the preceding claims,
**characterized in that**
the measure for the integrity of the wire cable (2) is determined with the aid of artificial intelligence.

5. A method (100) according to any one of the preceding claims,
**characterized in that**
the determined measure for the integrity of the wire cable (2) is provided via an interface of the sensor device (3) in a network.

6. A method (100) according to any one of the preceding claims,
**characterized in that**
the wire cable assembly (10) is operated as a function of the determined measure of the integrity of the wire cable (2).

7. A method (100) according to any one of the preceding claims,
**characterized in that**
when generating the magnetic interaction between the wire cable (2) and the sensor device (3), at least one rotatably mounted sensor unit (8) of the sensor device (3), which is set up to generate the sensor signal, is rotated relative to a stationary component of the wire cable assembly (10).

8. Device (1) for monitoring the integrity of a wire cable (2) in a wire cable assembly (10), comprising a sensor device (3) designed to generate a sensor signal based on a magnetic interaction between the sensor means (3) and the wire cable (2) moving past the sensor means (3), the device comprising a stationary component of the wire cable assembly (10) in which the sensor means (3) is integrated, **characterized in that**
the sensor device (3) is provided as a sheave (6; 6c) or cable drum and is designed to guide the wire cable (2) along its circumference in a curved manner at least in sections, wherein the device comprises a position encoder of the sheave or cable drum, and wherein the control device is designed to assign the generated control signal to the position of the wire cable detected by the position encoder relative to the sensor device and to use it as a basis for determining the measure of integrity.

9. A device (1) according to claim 8,
**characterized in that**
the sensor device (3) has a plurality of sensor units (8) for generating the sensor signal, which are arranged along a circumference of the cable sheave (6; 6c) or the cable drum.

10. Wire cable assembly (10), in particular a lifting system, with a device (1) according to one of claims 8 to 9.

## Revendications

1. Procédé (100) de surveillance de l'intégrité d'un câble métallique (2) dans un agencement de câble métallique (10), dans lequel
- le câble métallique (2) est déplacé devant un dispositif de détection (3) (S1),
- un signal de capteur caractérisant une interaction magnétique entre le dispositif de détection (3) et le câble métallique (2) déplacé devant le dispositif de détection (3) est généré (S2) à l'aide du dispositif de détection (3), et
- une mesure de l'intégrité du câble métallique (2) est déterminée (S3) sur la base du signal de capteur généré, le mouvement du câble métallique (2) étant généré (S1) pendant le fonctionnement normal de l'agencement de câble métallique (10), **caractérisé en ce que**
le câble métallique (2) est déplacé de manière incurvée devant le dispositif de détection (3), qui se présente sous la forme d'une poulie (6 ; 6c) ou d'un tambour de câble ou qui est intégré dans une poulie ou un tambour de câble, le signal de détection généré étant affecté à la position du câble métallique (2) par rapport au dispositif de détection (3) détectée par un codeur de position de la poulie ou du tambour de câble, et la mesure de l'intégrité du câble métallique (2) étant déterminée sur la base de cette affectation.

2. Procédé (100) selon l'une des revendications précédentes,
**caractérisée en ce qu'**
une prévision de l'évolution de l'intégrité du câble métallique (2) est établie sur la base de la mesure déterminée de l'intégrité du câble métallique (2).

3. Procédé (100) selon l'une quelconque des revendications précédentes,
**caractérisé en ce qu'**
il est vérifié si la mesure déterminée pour l'intégrité du câble métallique (2) satisfait à un critère d'échange et un signal d'échange est émis sur la base du résultat de la vérification.

4. Procédé (100) selon l'une quelconque des revendications précédentes,
**caractérisé en ce que**
la mesure de l'intégrité du câble métallique (2) est déterminée à l'aide d'une intelligence artificielle.

5. Procédé (100) selon l'une quelconque des revendications précédentes,
**caractérisé en ce que**
la mesure déterminée de l'intégrité du câble métallique (2) est fournie via une interface du dispositif de détection (3) dans un réseau.

6. Procédé (100) selon l'une quelconque des revendications précédentes, **caractérisée en ce que**
l'agencement de câble métallique (10) est opéré en fonction de la mesure déterminée de l'intégrité du câble métallique (2).

7. Procédé (100) selon l'une quelconque des revendications précédentes, **caractérisée en ce que**
lors de la génération de l'interaction magnétique entre le câble métallique (2) et le dispositif de détection (3), au moins une unité de détection montée rotative (8) du dispositif de détection (3), qui est configurée pour générer le signal de détection, est tournée par rapport à un composant stationnaire de l'agencement de câble métallique (10).

8. Dispositif (1) pour surveiller l'intégrité d'un câble métallique (2) dans un agencement de câble métallique (10), comprenant un dispositif de détection (3) conçu pour générer un signal de détection basé sur une interaction magnétique entre le moyen de détection (3) et le câble métallique (2) se déplaçant devant le moyen de détection (3), le dispositif comprenant un composant fixe de l'agencement de câble métallique (10) dans lequel le moyen de détection (3) est intégré,
**caractérisé en ce que**
le dispositif de détection (3) se présente sous la forme d'une poulie (6 ; 6c) ou d'un tambour de câble et est conçu pour guider le câble métallique (2) le long de sa circonférence de manière incurvée, au moins par sections, le dispositif comprenant un codeur de position de la poulie ou du tambour de câble, et le dispositif de commande étant conçu pour affecter le signal de commande généré à la position du câble métallique détectée par le codeur de position par rapport au dispositif capteur et pour l'utiliser comme base pour déterminer la mesure de l'intégrité.

9. Dispositif (1) selon la revendication 8,
**caractérisé en ce que**
le dispositif de détection (3) comporte plusieurs unités de détection (8) pour générer le signal de détection, qui sont disposées le long d'une circonférence de la poulie de câble (6 ; 6c) ou du tambour de câble.

10. Agencement de câble métallique (10), en particulier un système de levage, avec un dispositif (1) selon l'une des revendications 8 à 9.
